Europäisches Patentamt

European Patent Office

Office européen des brevets

(11) Publication number: **0 229 508**
**A1**

## (12) EUROPEAN PATENT APPLICATION

(21) Application number: **86309828.1**

(22) Date of filing: **16.12.86**

(51) Int. Cl.³: **A 01 G 7/00**
**A 01 G 9/00, A 01 G 29/00**

(30) Priority: **18.12.85 GB 8531140**

(43) Date of publication of application:
**22.07.87 Bulletin 87/30**

(84) Designated Contracting States:
**DE FR NL**

(71) Applicant: **The BOC Group plc**
**Chertsey Road**
**Windlesham Surrey GU20 6HJ(GB)**

(72) Inventor: **Stratton, Paul Francis**
**42 Park Lea Bradly**
**Huddersfield West Yorkshire, HD2 1QH(GB)**

(74) Representative: **Wickham, Michael et al,**
**c/o Patent and Trademark Department The BOC Group plc**
**Chertsey Road**
**Windlesham Surrey GU20 6HJ(GB)**

(54) **Method and apparatus for oxygenation.**

(57) In the commercial cultivation of plants such as tomatoes in glass houses, their roots are oxygenated by supplying oxygen to oxygenation pipes (28) embedded in support medium for the roots. The rate of oxygenation is increased or decreased automatically in response respectively to increases or decreases in the number of quanta of photosynthetically active radiation incident per unit time on the glass house. Typically an oxygen flow rate control valve (14) responds to a sensor (8) comprising a photo-electric cell (18) having a filter (20) that transmits only chosen wave lengths.

FIG.1.

TO HOSES

Croydon Printing Company Ltd

EP 0 229 508 A1

0229508

## METHOD AND APPARATUS FOR OXYGENATION

This invention relates to a method and apparatus for oxygenation, and in particular to the oxygenation of roots.

It is conventional practice in the commercial propagation of plants and vegetables under glass to support the roots of such plants and vegetables in a solid medium other than soil. For example, sawdust or rock wool may be used. It therefore becomes necessary to supply the roots with nutrients from a specially prepared solution, and such solution is from time-to-time applied to the medium in which the roots are supported.

It is known that plant root respiration rate depends on the concentration of oxygen dissolved in the water film. Typically this oxygen is supplied by natural aeration of the water supplied to the roots. It is known to increase artificially the dissolved oxygen concentration by oxygenating the water. It has also been proposed to oxygenate directly sawdust employed in bags to support the roots of cucumber plants. The purpose of this oxygenation is to maintain aerobic conditions within the sawdust medium.

It is our hypothesis that the preferred time for supplying oxygen to the roots is when the rate of photosynthesis is at a maximum. Since the rate of photosynthesis depends on the number of quanta of light incident upon the plant per unit time we believe that the rate of supply of oxygen to the plants should be varied in accordance with this parameter. The invention relates to apparatus and method for achieving this end at least in part.

According to the present invention there is provided apparatus for oxygenating the roots of botanical species, comprising a plurality of oxygenators able to be positioned such that they terminate in support medium, in which support medium said roots reside, each oxygenator is able to be placed in communication with said oxygen source via a main pipe, a flow control valve located in said main pipe, and means sensitive to light incident thereupon to generate a signal which is a function of the number of quanta of such light incident thereupon per unit time, whereby the setting of the flow control valve is able to be adjusted to give a relatively greater oxygen flow rate therethrough during a period in which said number of quanta per unit time is relatively large and a relatively lower flow rate during a period in which said number of quanta per unit time is relatively small.

The invention also provides a method of oxygenating the roots of botanical species, comprising supplying the oxygen to the roots through a plurality of oxygenators terminating in support medium in which said roots reside, controlling the flow rate of oxygen to the oxygenators by means of a flow control valve, and adjusting the setting of the valve in response to changes in the number of quanta of light per unit time incident upon a sensing device, whereby the flow rate through the valve is relatively greater when said number of quanta per unit time is relatively large and relatively lower when said number of quanta per unit time is relatively small.

The method and apparatus according to the present invention is suitable for use in the propagation of any commercially grown botanical species having roots. It may for example be employed in growing cucumbers, tomatoes, aubergines, and other fruit and vegetables. It may also be employed in growing flowers, for example chrysanthemums. The support medium may be any one of those that are used conventionally, for example perlite rock wool, sawdust or peat.

The method and apparatus according to the present invention are
particularly suited for use in growing plants commercially under
glass by the nutrient film technique.

Preferably, the maximum rate of supplying oxygen to the vicinity of
the roots of each individual plant (or other botanical species) is
arranged to be no more than 2 litres per hour at a maximum.
The flow control valve may be controlled such that in total up to about 6
litres of oxygen per plant are supplied during a day of average
incident radiation under English climatic conditions.  There will
typically be diurnal variations in the rate of supplying oxygen
according to whether it is a cloudy or sunny day and according to
the time of year.

The method and apparatus according to the invention make it possible
to gain a closer approach to harmonising the supply of oxygen to the
roots of the biological species with the biochemical demand for
oxygen set up by the biochemical reactions necessary for the growth
of the plants.

Preferably, automatic valve control means are employed whereby said
signals generated by said sensor are employed automatically to
control the setting of the valve.

The sensor preferably comprises a photo-electric cell.  Preferably,
the sensor is provided with a filter that transmits only a part of
the visible spectrum.  For example, only radiation having
wavelengths of 680 to 700 nanometers may be transmitted by the
filter to the sensor.  Such wavelengths correspond to those absorbed
by chlorophyll during photosynthesis.

The method and apparatus according to the invention will now be
described by way of example with reference to the accompanying
drawings, in which:

Figure 1 is a schematic drawing of a oxygen supply system for use in the invention, and

Figure 2 is a side elevation illustrating the termination of the oxygenators used in Figure 1 in support medium.

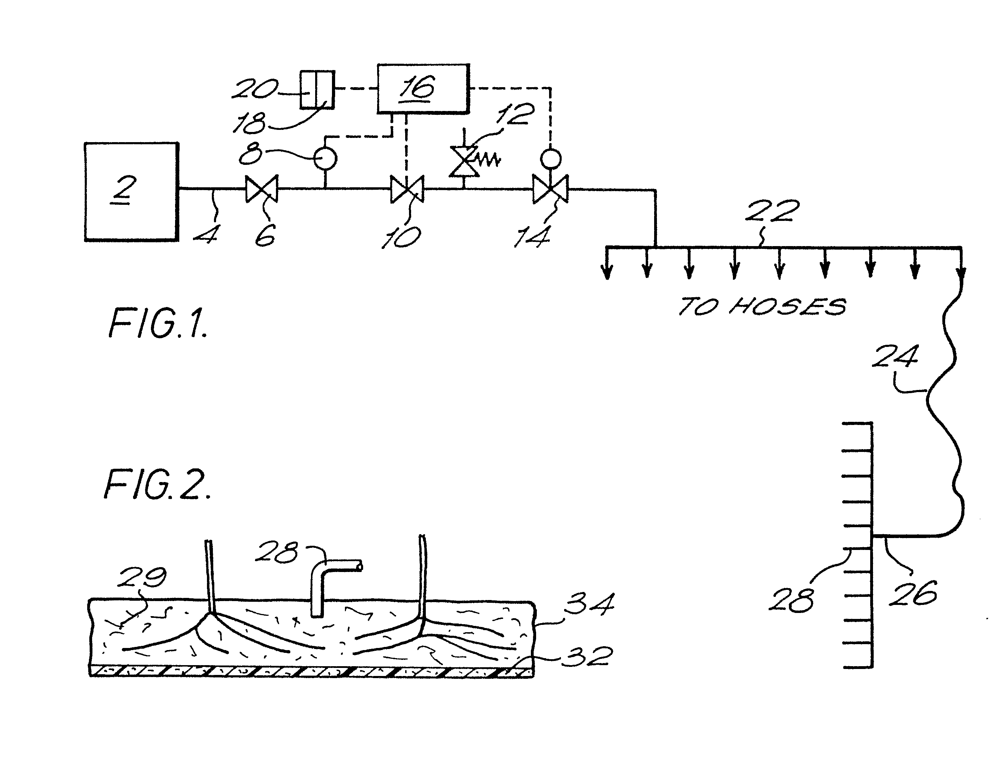

Referring to Figure 1 of the drawings, an oxygen source 2 communicates with a main pipeline 4. The oxygen source 2 may comprise one or more cylinders containing oxygen under pressure, or a thermally insulated vessel containing liquid oxygen fitted with a vaporiser. Such sources of oxygen are well known in the oxygen supply and need not be described further herein. A manually-operable shut off valve 6 is located in the pipeline 4. This valve is normally kept open, but when the apparatus is not in use, it is preferably closed. An automatic block valve 10 is located in the pipe 4 downstream of the shut off valve 6. The valve 10 is operatively associated with an automatic valve controller 16. The controller 16 is also operatively associated with a pressure sensor 8 communicating with the pipeline 4 at a region intermediate the valves 6 and 10. The arrangement is such that, in the event of the pressure in the pipeline 4, as sensed by the sensor 8, reaching a predetermined maximum indicative of a malfunction in the gas distribution system shown in Figure 1, the block valve is closed. During normal operation, however, the block valve remains open. Downstream of the block valve 10, a pressure relief valve 12, communicates with the pipe 4. Downstream of the pressure relief valve 12 a flow control valve 14 is located in the pipe 4. The flow control valve 14 is automatically operable and is operatively associated with the valve controller 16. The valve controller 16 is also operatively associated with a photoelectric cell 18 provided with a light filter 20 which permits only those wavelengths of visible light in the range 680 to 700 nanometers to be transmitted to the cell 18. The valve controller 16 may be calibrated such that the valve 14 opens progressively or in steps with increasing number of quanta per unit time incident upon the cell 18 increases, and to be closed progressively or in steps as the number of quanta per unit time incident upon the cell 18 decreases. The flow rate of

0229508

oxygen through the valve 14, in operation of the apparatus shown in Figure 1, thus increases with increasing number of quanta of light per unit time incident upon the cell 18. And with decreasing number of such quanta, it decreases. It is typically arranged that at night the valve 14 is closed. During the day time, the valve 14 will tend to open progressively as the number of quanta per unit time falling on the cell 18 increases. On a sunny day, once the sun is past its zenith, the valve will tend to close and the rate of oxygen passing therethrough will be reduced accordingly.

The pipe 4 terminates downstream of the valve 14 in a header 22 which has a multiplicity of outlets each receiving one end of an oxygen hose 24 or other means of conveying oxygen. In a commercial glass house, each hose 24 may be employed to supply a chosen number of plants, for example, a row of plants all situated in the same gully or trough. Accordingly, at its other end, each hose 24 terminates in a distributor 26 having a multiplicity of openings which receive oxygenating pipes 28. The hose 24, distributors 26 and pipes 28 are typically made of synthetic materials that are suitable for use with pure oxygen and which in the case of the oxygenator pipes 28 does not contain any plasticiser of a type injurious to the plants being grown. For the purposes of clarity of illustration, only one such distributor 26 and one set of oxygentor pipes 28 are shown in Figure 1. Each oxygenator pipe 28 is associated with the roots of an individual plant or small groups of plants contained within the same support medium. As shown in Figure 2, each such oxygenator pipe 28 terminates within a bed 29 of support medium such as perlite or rock wool which typically lies on a base 32 of an insulating polystyrene material. In one typical arrangement, as shown in Figure 2, two plants are grown in a single enclosure 34 (for example a bag) containing said support medium 29. The spacing between individual oxygentor pipes 28 may be chosen in accordance with the spacing between individual plants or group of plants along the enclosure trough or gully in which the support medium is kept. - It is to be appreciated that the apparatus according to the invention may be used to supply oxygen to the roots of each one of several hundred or more individual plants. If the number of plants to be oxygenated are more than can reasonably supplied with oxygen from a single main pipe 4, a plurality of such pipes may be employed, each as shown in Figure 1 and each having its own header 22, oxygen hoses 24, distributors 26 and oxygenator pipes 28.

If desired, each oxygen pipe 28 may comprise a simple length of piping having a uniform diameter. Alternatively, it may be formed with a nozzle, (not shown) at its outlet end.

The internal volume of the apparatus shown in Figure 1 downstream of the valve 14 is desirably only a small fraction of the total volume of oxygen that is supplied per day to the plants. It is inevitable, however, that such internal volume will be more than negligible. Inevitably, therefore, there is a delay between the valve 14 having its setting adjusted in response to a signal generated by the photo-electric cell 18, and a change in the rate at which oxygen flows out of the pipes 28. With careful design of the apparatus, such delay can be kept within reasonable bounds say no more than about an hour and this enables the flow rate of oxygen to the plants to be varied in reasonable accordance with diurnal variations in the light incident upon the photo-electric cell 18, without there being an unreasonably high oxygen flow rate to the plants. Indeed, it is preferred that the oxygen flow rate, at maximum flow, is no more than one litre per hour per plant. Such a flow rate amounts to no more than a "trickle" of oxygen and this enables a substantial proportion of the oxygen so supplied to be taken up by the plant rather than permeating through the support medium into the atmosphere in the glass house where the plants are grown. The method and apparatus according to the invention thereby avoid the disadvantages of prior art oxygenation systems in which oxygen is supplied at much greater flow rates in relatively short bursts either directly to the plants or to the nutrient feed solution, such that typically the oxygen is taken up less efficiently, and in which there is no relationship between the periods in which the oxygen is supplied and those in which the rate of biosynthesis of the chemicals necessary for growth of the plants is at a maximum and hence its requirements for oxygen is at a maximum.

0229508

In typical operation of the apparatus shown in Figures 1 and 2, oxygen is supplied from the source 2 through the main pipe 4 via the hoses to the oxygenation pipes 23. When it is dark, and substantially no light of the chosen wavelengths falls upon the cell 18, the valve 14 is in its closed position. As dawn breaks and it becomes progressively lighter, the number of quanta of light per unit time on the photo cell 18 approaches a level at which the valve 14 is opened. The valve controller 16 may be arranged so that with chosen increases in the number of quanta of light of chosen wavelengths falling upon the cell 18 per unit time, the valve 14 is opened by chosen degrees up to a maximum, corresponding, say, to the light incident upon the cell on a cloudless day in mid-summer at noon, Greenwich meantime, when the valve would be fully open.

The photo-cell 18 is typically located in a position in which the amount of radiation incident upon it is similar to that which is incident upon the plants. Alternatively, the photo-cell 18 may be located outside the glass house in which the plants are grown and in a position such that it is unaffected by shadows such as are thrown by the glazing bars of the greenhouse. In calibrating or programming the controller 16, an allowance or correction is therefore made for the reduction in incident radiation in the visible spectrum by the glass.

The method and apparatus according to the invention are further illustrated by the following example :

During 1986 a single compartment (20m x 12m) of a glasshouse was used in an experiment to compare a tomato crop's response to oxygen under two regimens of varying levels of root-zone application with that of a non-enriched control. On a day-to-day basis the amounts of oxygen used to enrich the root-zone environments were related linearly to the illuminance measured by a Megatron type B photocell sensitive to light in the waveband 680-700nm. The light sensor was sited above the ridge of the glasshouse and its electrical output was fed to an electronic controller which varied the rate of oxygen supply to the experimental plots. Three samples were grown under different conditions of oxygenation:

*    Control, i.e. no oxygen supplied.

*    Low, oxygen supplied at an average rate of two litre per plant per day.

*    High, oxygen supplied at an average rate of six litres per plant per day.

The six litres and two litres per plant per day oxygenation rates respectively provided 0.003 and 0.001 litres per hour per plant for each Watt per square metre of photosynthetically active radiation incident upon the glasshouse.

The root-zone environments oxygen were enriched daily from sunrise to sunset with oxygen supplied from cylinders located outside the glasshouse. Distribution of the gas within the glasshouse was by means of 15mm copper tubing overhead and 6 mm flexible tubing (of a kind which is safe to use with oxygen) at ground level between the plant rows. A single nozzle (c. 0.15mm diameter) was inserted to maximum depth in the centre of each standard-sized (700 mm x 200 mm x 75 mm) rockwool growing module accommodating two tomato plants. Oxygen enrichment was practised from 23 April until 15 September 1986 (i.e. 21 weeks in toto).

Seeds of the cultivar Calypso were sown (December 30, 1985) on multiblock rockwool mats pre-soaked with appropriate mineral nutrient solution and germinated at $20/21^oC$. The resultant seedlings were transferred (January 9, 1986) to 75 mm x 75 mm x 65 mm 'Grodan' rockwool cubes pre-soaked with appropriate mineral nutrient solution. Environmental conditions during propagation were in accordance with those promulgated by the Agricultural Development and Advisory Service (A.D.A.S).

During the middle of February the young tomato plants were transferred to their cropping positions in the glasshouse. A randomised block design was used in the experiment; there were three blocks and each was divided into three plots. The three oxygen treatments were assigned at random to the plots in each block.

Plants were grown in double rows 1.6 m apart. Spacing within and between the single rows was 0.5 m (nom.) and 0.4 m (nom.) respectively. The overall population density for the area of cropping was equivalent to 2.57 plants per square metre (c.10.300 plants per acre). A mineral nutrient solution containing all the essential elements was applied daily to give a 'run-off' of approximately 20%. The water requirement was based on the daily solar radiation integral and the conductivity of the mineral nutrient solution was kept within the range 2000-5000 micro S; the actual value depended on the stage of development and the anticipated weather conditions.

A minimum temperature of $15^oC$ was maintained during the night from planting to the end of cropping. From planting until the start of picking (April 28) minimum temperatures of 20 and $26^oC$ were maintained during the day and at ventilation respectively. Thereafter, the minimum temperatures were $18^oC$ for heating and $21^oC$ for ventilation. $CO_2$ enrichment was practised daily from planting until the end of cropping. A level of 1000 vpm was applied (except during ventilation) until the end of April; thereafter the requirement was to avoid depletion.

Plants were grown as vertical cordons and trained with a layering system using bobbins. Glasshouse whitefly was controlled biologically by use of the parasitic wasp Encarsia Formosa while all other pests and diseases were controlled chemically by spraying.

The results obtained are summarised in the Table below and illustrate the beneficial effects of root oxygenation.

| Daily rate of $O_2$ Supply l/plant | Yield kg/plant | Fruit count no./plant | Fruit size g/fruit | Quality %Class 1 | Quality % 'Select' |
|---|---|---|---|---|---|
| None | 10.79 | 137 | 79 | 86 | 42 |
| C. 2 | 11.28 | 139 | 81 | 86 | 40 |
| C. 6 | 11.22 | 136 | 83 | 87 | 40 |

CLAIMS

1. Apparatus for oxygenating the roots of botanical species, comprising a plurality of oxygenators able to be positioned such that they terminate in support medium, in which support medium said roots reside, each oxygenator being able to be placed in communication with said oxyg source via a main pipe, a flow control valve located in said main pipe, and means sensitive to light incident thereupon to generate a signal which is a function of the number of quanta of such light incident thereupon per unit time, whereby the setting of the flow control valve is able to be adjusted to give a relatively greater oxygen flow rate therethrough during a period in which said number of quanta per unit time is relatively large and a relatively lower flow rate during a period in which said number of quanta per unit time is relatively small.

2. Apparatus as claimed in claim 1, additionally including automatic valve control means, whereby said signals generated by said sensor are employed automatically to control the setting of the valve.

3. Apparatus as claimed in claim 1 or claim 2, in which the sensor comprises a photo-electric cell.

4. Apparatus as claimed in claim 3, in which said photo-electric cell has a filter that transmits only a part of the visible spectrum.

5. Apparatus as claimed in claim 4, in which said filter transmits wavelengths only in the range 680 to 700 nm.

6.  A method of oxygenating the roots of botanical species, comprising supplying the oxygen to the roots through a plurality of oxygenators terminating in support medium in which said roots reside, controlling the flow rate of oxygen to the oxygenators by means of a flow control valve, and adjusting the setting of the valve in response to changes in the number of quanta of light per unit time incident upon a sensing device, whereby the flow rate through the valve is relatively greater when said number of quanta per unit time is relatively large and relatively lwoer when said number of quanta per unit time is relatively small.

7.  A method as claimed in claim 6, in which the setting of said valve is controlled automatically in response to said changes in the number of quanta.

8.  A method as claimed in claim 7 in which the sensing device transmits light having wavelengths in the range 680 to 700 nm only.

9.  A method as claimed in any one of claims 6 to 8, in which the roots of tomato plants are oxygenated.

10. A method as claimed in any one of claims 6 to 9, in which the oxygen is supplied at an average daily rate of up to 6 litres per plant.

FIG.1.

FIG.2.

TO HOSES

0229508

1/1

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| A | US-A-3 550 319 (F.C. GAINES) <br> * column 2, lines 25-45, 56-59 * <br><br> --- | 1 | A 01 G 7/00 <br> A 01 G 9/00 <br> A 01 G 29/00 |
| A | US-A-3 274 730 (R.N. BOSE) <br> * complete document * <br><br> --- | 1 | |
| P,A | US-A-4 569 150 (W.H. CARLSON) <br> * claims, figures * <br><br> --- | 1 | |
| A | FR-A-2 554 313 (J.-C. COTTET et al.) <br> * claim 1, figure 1 * <br><br> --- | 1 | |
| A | US-A-4 175 356 (D.J. ALLEN) <br> * claim, figure * <br><br> ----- | 1 | **TECHNICAL FIELDS SEARCHED (Int Cl 4)** <br><br> A 01 G 7/00 <br> A 01 G 9/00 <br> A 01 G 11/00 <br> A 01 G 25/00 <br> A 01 G 29/00 |

The present search report has been drawn up for all claims

| Place of search | Date of completion of the search | Examiner |
|---|---|---|
| BERLIN | 11-03-1987 | WUNDERLICH J E |